# EUROPEAN PATENT SPECIFICATION

(11) **EP 1 364 841 B1**
(45) Date of publication and mention of the grant of the patent: **26.07.2006**
(21) Application number: 03009876.8
(22) Date of filing: 15.05.2003
(51) Int. Cl.: B60R 21/16

(54) **Occupant protection device**
Insassenschutzvorrichtung
Dispositif de protection de passager

(30) Priority: 22.05.2002 JP 2002147961
(43) Date of publication of application: 26.11.2003
(73) Proprietor: TAKATA CORPORATION, Minato-ku, Tokyo 106-8510 (JP)
(72) Inventor: Amamori, Ichiro, Minato-ku, Tokyo 106-8510 (JP)
(74) Representative: Banzer, Hans-Jörg

(56) References cited:
- DE-A- 10 021 845
- DE-A- 19 860 804
- DE-A- 19 860 827
- DE-U- 29 916 526
- US-A- 5 670 853
- PATENT ABSTRACTS OF JAPAN vol. 2000, no. 09, 13 October 2000 (2000-10-13) & JP 2000 168486 A (NISSAN MOTOR CO LTD), 20 June 2000 (2000-06-20)
- PATENT ABSTRACTS OF JAPAN vol. 1998, no. 01, 30 January 1998 (1998-01-30) & JP 9 240406 A (TOYODA GOSEI CO LTD), 16 September 1997 (1997-09-16)

## Description

### [Technical Field of the Invention]

The present invention relates to an occupant protection device for protecting an occupant of a vehicle by inflating an airbag forward of the occupant during a crash.

### [Description of the Related Art]

Occupant protection devices equipped in vehicles for protecting an occupant by the inflation of an airbag forward of the occupant during a crash generally use a driver-seat airbag device mounted to a steering and a front-passenger-seat airbag device mounted to an instrument panel.

Japanese Unexamined Patent Application Publication Nos. 6-344842, 7-117605, and 9-328048 disclose an airbag device in which an airbag is inflated from a roof of a vehicle downwardly.

Furthermore, an occupant protection device according to the preamble of independent claim 1 is known from DE 299 16 526 U1.

### [Problems to be Solved by the Invention]

The conventional driver-seat airbag devices and front-passenger-seat airbag devices have relatively high capacity so that an inflated airbag receives all the thorax and head of an occupant. Therefore, a gas generator for inflating the airbag provides corresponding high output.

Accordingly, it is an object of the present invention to provide an occupant protection device capable of inflating an airbag at a sufficiently early stage even with a low-output gas generator.

### [Means for Solving the Problems]

According to the present invention, this object is achieved by an interior airbag device as defined in claim 1. The dependent claims define preferred or advantageous embodiments of the present invention.

In an occupant protection device of the present invention comprising an airbag to be deployed forward of a vehicle occupant and a gas generator for inflating the airbag, the airbag includes a thorax-protection airbag to be deployed forward of the thorax of the occupant and a head-protection airbag to be deployed forward of the head of the occupant.

Since the occupant protection device of the invention includes the thorax-protection airbag and the head-protection airbag, the individual airbag is less in its capacity requirement than the airbag of the predetermined-art airbag device, thus allowing the use of a low-output gas generator for each airbag. Furthermore, the start timing of the inflation and the inner pressure in inflation of the thorax-protection airbag and the head-protection airbag may be controlled individually.

In the invention, there are further provided sitting-height sensing means for sensing the sitting height of the occupant, wherein when the sitting height sensed by the sitting-height sensing means is higher than a predetermined value, both the head-protection airbag and the thorax-protection airbag can be inflated, and when the sensed sitting height is lower than a predetermined value, only the thorax-protection airbag can be inflated. With such an arrangement, when the occupant such as a child has a low sitting height, the head and thorax of the occupant can be received by inflating only the thorax-protection airbag.

Preferably, the head-protection airbag is arranged at the roof of the vehicle, since the roof of the vehicle has enough strength to receive the reaction force during the inflation of the airbag sufficiently.

Since the head-protection airbag receives the head of the occupant, which is more lightweight than the thorax, it is less in its capacity requirement than the thorax-protection airbag. Decreasing the capacity of the head-protection airbag allows the use of a low-output gas generator for the head-protection airbag.

According to an embodiment of the invention, the head-protection airbag is deployed along the windshield of the vehicle, having a thickness of 25 to 200 mm in inflation.

The relatively thin airbag has a low capacity, thus being deployed at sufficiently early stage even with a low-output gas generator. Inflating the thin airbag over a wide range along the windshield allows even the head of an out-of-position occupant to be received along the head-protection airbag.

The head-protection airbag of the invention is arranged above a rearview mirror and is a unit of a right half to be deployed in the right area from the rearview mirror and a left half to be deployed in the left area from the rearview mirror, and also, a spacing is provided between the right half and the left half for the admission of the rearview mirror. A single gas inlet is provided at the lateral cneter of the head-protection airbag for inflating the head-protection airbag. With such an arrangement, the head-protection airbag can be deployed both in front of the driver seat and in front of the front passenger seat with one gas generator.

### [Brief Description of the Drawings]

Fig. 1 is a longitudinal sectional view of a vehicle equipped with an occupant protection device.
Fig. 2 is a longitudinal sectional view of a vehicle equipped with another occupant protection device to which the present invention may be applied.
Fig. 3 is a perspective view of an airbag according to an embodiment of the invention.
Fig. 4 is a cross sectional view taken along line IV-IV of Fig. 3.
Fig. 5 is a longitudinal sectional view of a vehicle equipped with another occupant protection device to which the present invention may be applied.
Fig. 6 is a longitudinal sectional view of a vehicle equipped with an occupant protection device according to the invention.

### [Description of the Embodiments]

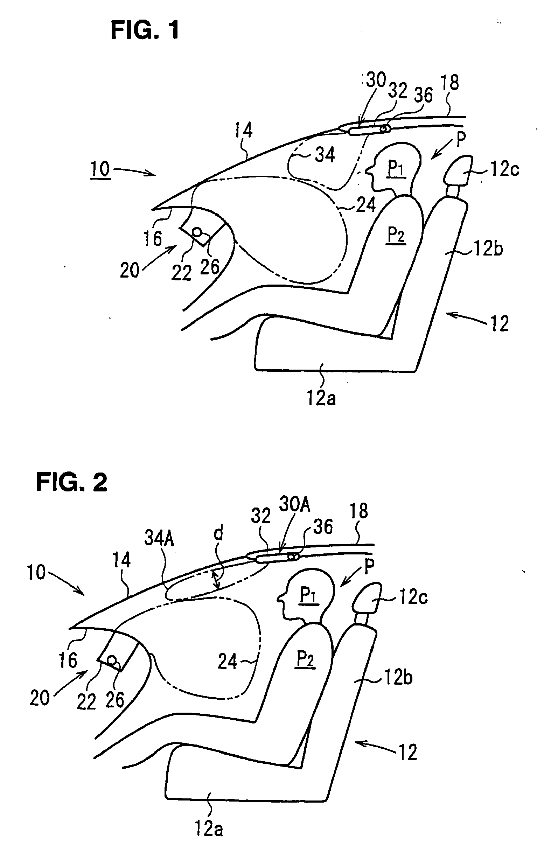

Embodiments of the invention will be described with reference to the drawings hereinafter. Fig. 1 is a longitudinal sectional view of a vehicle equipped with an occupant protection device.

The occupant protection device protects an occupant P in a front passenger seat 12 of a vehicle 10. Reference numeral 14 denotes a windshield of the vehicle 10; reference numeral 16 denotes an instrument panel; and reference numeral 18 denotes a roof. Reference numeral 12a denotes a seat cushion, reference numeral 12b denotes a seat back; and reference numeral 12c denotes a headrest.

The instrument panel 16 is equipped with a thorax-protection airbag device 20, and the roof 18 is equipped with a head-protection airbag device 30. The airbag devices 20 and 30 include containers 22 and 32, airbags 24 and 34 housed in the containers 22 and 32 in an folded condition, gas generators (inflators) 26 and 36 for inflating the airbags 24 and 34, and lids (not shown) for covering the containers 22 and 32, respectively.

The airbag 24 is a thorax-protection airbag and the airbag 34 is a head-protection airbag.

The thorax-protection airbag device 20 is mounted on the top of the instrument panel 16, the thorax-protection airbag 24 being inflated from the top of the instrument panel 16 toward the back of the vehicle.

The head-protection airbag device 30 is mounted at the front end of the roof 18, the head-protection airbag 34 being inflated from the front end of the roof 18 downwardly. The inflated head-protection airbag 34 is in contact with the windshield 14.

The occupant P in the front passenger seat 12 is an adult with a normal sitting height, the head P₁ being positioned ahead of the headrest 12c, and the thorax P₂ being positioned in upper front of the seat back 12b. The thorax-protection airbag 24 is principally deployed forward of the thorax P₂ and the head-protection airbag 34 is principally deployed forward of the head P₁.

When the vehicle 10 comes into collision, the respective gas generators 26 and 36 of the airbag devices 20 and 30 are activated to jet a gas, and the airbags 24 and 34 are deployed forward of the thorax P₂ and the head P₁, as expressed by the chain double-dashed lines, to receive the thorax P₂ and the head P₁, respectively.

The conventional front-passenger-seat airbag has a capacity on the order of total of the airbags 24 and 34 according to this embodiment, while in the embodiment, the airbags 24 and 34, which are sufficiently smaller than the conventional front-passenger-seat airbag, are individually inflated by the gas generators 26 and 36, respectively; accordingly, the airbags 24 and 34 can be inflated sufficiently early even with the gas generators 26 and 36 of low output.

The head-protection airbag 34 is inflated near the head of the occupant, P₁, as shown in the drawing. The head-protection airbag 34 receives the head P₁ which is more lightweight than the thorax P₂, thus having a lower capacity than the thorax-protection airbag 24. In this embodiment, preferably, the head-protection airbag 34 has a capacity on the order of 15 to 60 litters and the thorax-protection airbag 24 has a capacity on the order of 80 to 120 litters.

Fig. 2 is a longitudinal sectional view of a vehicle equipped with another occupant protection device.

The head-protection airbag device 30A employs a low-profile airbag as a head-protection airbag 34A, which is inflated along the windshield 14 so that the maximum thickness d in inflation is about 25 to 200 mm, more preferably, 50 to 150 mm, where the thickness d of the inflated head-protection airbag 34A indicates a thickness perpendicular to the windshield 14. Other arrangements of Fig. 2 are similar to those of Fig. 1 and the same reference numerals denote the same components. The low-profile airbag 34A is so low in capacity that it is sufficient to use the gas generator 36 of a fairly low output.

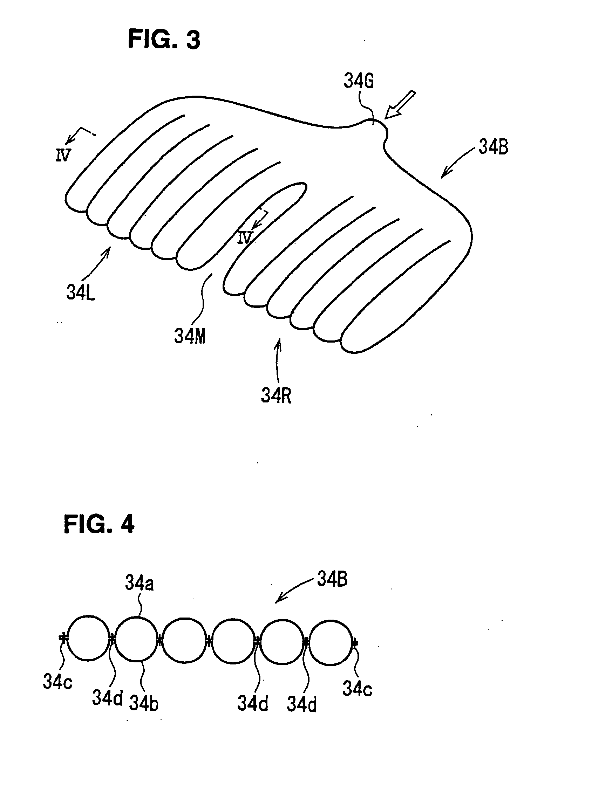

A curtain head-protection airbag 34B for both a driver seat and a front passenger seat, shown in Figs. 3 and 4, may be used as an alternative for the head-protection airbag 34A of Fig. 2. The head-protection airbag 34B has a left half 34L and a right half 34R, having a spacing 34M between the left half 34L and a right half 34R for the admission of a rearview mirror. The head-protection airbag 34B is arranged at the center of the width of the front end of the roof and above the rearview mirror. The head-protection airbag 34B is inflated by the introduction of a jet gas from the gas generator 36 through a gas inlet 34G provided at the lateral center of the head-protection airbag 34B. Since the spacing 34M is provided, the left half 34L and the right half 34R are inflated downward along the windshield 14 so as to go around the rearview mirror.

The airbag 34 is formed such that a front panel 34a and a rear panel 34b are put together and the peripheries thereof are stitched together with a sewing thread 34c to form a bag, as shown in Fig. 4. In the left half 34L and the right half 34R, the front panel 34a and the rear panel 34b are stitched together at a plurality of stitch sections 34d that extend from the lower end upwardly. Providing the stitch sections 34d decreases the maximum thickness of the inflated head-protection airbag 34B.

The thin head-protection airbags 34A and 34B may have no vent hole or, alternatively, may have an extremely small-diameter vent hole.

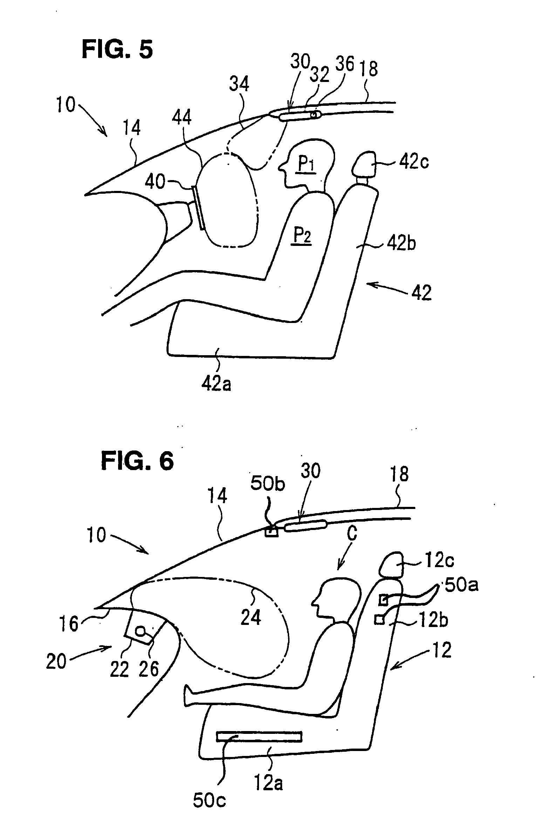

The thorax-protection airbag device is for a front-seat passenger; however, a thorax-protection airbag device for a driver seat occupant may be employed as shown in Fig. 5. The driver-seat thorax-protection airbag device is provided to a steering 40. The airbag (thorax-protection airbag) 44 is inflated over the front area from the thorax P₂ of the occupant (adult) P in a driver seat 42 to the lower half of the head. The airbag 44 is somewhat smaller than that of a general driver-seat airbag device; however, it may be of the same size. The driver seat 42 includes a seat cushion 42a, a seat back 42b, and a headrest 42c. Other arrangements of Fig. 5 are the same as those of Fig. 1 and the same reference numerals denote the same components.

A head-protection airbag device having the head-protection airbag 34B, shown in Figs. 3 and 4, may be employed as an alternative for the head-protection airbag device 30 of Fig. 5.

In the invention, sitting-height sensing means are provided, wherein when an occupant C such as a child has a sitting height lower than a predetermined value, only the thorax-protection airbag 24 may be inflated, as shown in Fig. 6. With such an arrangement, it is sufficient to replace only the thorax-protection airbag device with a new one in repairing a vehicle after a crash, thus reducing the cost of repair.

Examples of the sitting-height sensing means are sitting-height sensing means with an image pickup device and an image analysis device, a plurality of human-body sensors 50a arranged at intervals along the height of the seat back 12b, as shown in Fig. 6, and an infrared distance-measuring device 50b arranged at the roof 18, as also shown in Fig. 6, but the invention is not limited to those. For example, it is also possible to use a weight sensor 50c disposed in the seat 12, in the seat cushion 12a thereof or at a slide rail of the seat 12 etc., as depicted in Fig. 6, for measuring the weight of the occupant and determining the sitting-height.

In the invention, an airbag inner pressure during the inflation of the airbag may be controlled by sensing the impact of the crash and the weight of the occupant or, alternatively, the activation of the airbag device may be controlled by sensing the presence/absence or the direction of a child seat in the seat. Furthermore, the activation of the airbag device may be controlled by sensing the position of the occupant. The head-protection airbag and the thorax-protection airbag may be inflated at the same timing or alternatively either of them is inflated first.

### [Advantages]

As described above, the occupant protection device of the present invention is capable of inflating an airbag at a sufficiently early stage even with a low-output gas generator, and protecting the head of an occupant sufficiently.

## Claims

1. An occupant protection device, comprising
an airbag (24, 34; 44; 34A; 34B) to be deployed forward of a vehicle occupant (P), and
a gas generator (26; 36) for inflating the airbag,
wherein the airbag (24, 34; 44; 34A; 34B) includes a thorax-protection airbag (24; 44) to be deployed forward of the thorax (P₂) of the occupant (P) and a head-protection airbag (34; 34A; 34B) to be deployed forward of the head (P₁) of the occupant,
wherein the head-protection airbag (34B) is to be arranged above a rearview mirror and is a unit of a right half (34R) to be deployed in the right area from the rearview mirror and a left half (34L) to be deployed in the left area from the rearview mirror, and wherein a spacing (34M) is provided between the right half (34R) and the left half (34L) for the admission of the rearview mirror,
**characterized in that**
a single gas inlet (34G) is provided at the lateral center of the head-protection airbag (34; 34A; 34B) for inflating the head-protection airbag (34; 34A; 34B) by the introduction of gas from the gas generator (26; 36) through the single gas inlet (34G); and
sitting-height sensing means (50a-c) for sensing the sitting-height of the occupant (P) are provided, wherein when the sitting height sensed by the sitting-height sensing means (50a-c) is higher than a predetermined value, both the head-protection airbag (34; 34A; 34B) and the thorax-protection airbag (24; 44) can be inflated, and when the sensed sitting height is lower than a predetermined value, only the thorax-protection airbag (24; 44) can be inflated.

2. An occupant protection device according to Claim 1, wherein the head-protection airbag (34; 34A; 34B) is to be deployed downward from a roof (18) of the vehicle.

3. An occupant protection device according to Claim 1 or Claim 2, wherein the capacity of the head-protection airbag (34; 34A; 34B) is lower than the capacity of the thorax-protection airbag (24; 44).

4. An occupant protection device according to any one of Claims 1 to 3, wherein the head-protection airbag (34; 34A; 34B) is to be deployed along the windshield (14) of the vehicle (10), and wherein the thickness in inflation is 25 to 200 mm.

## Patentansprüche

1. Insassenschutzvorrichtung umfassend
einen Airbag (24, 34; 44; 34A; 34B), welcher vor einem Fahrzeuginsassen (P) zu entfalten ist, und
einen Gasgenerator (26; 36) zum Aufblasen des Airbags,
wobei der Airbag (24, 34; 44; 34A; 34B) einen Brustschutz-Airbag (24; 44), welcher vor der Brust (P₂) des Insassen (P) zu entfalten ist, und einen Kopfschutz-Airbag (34; 34A; 34B), welcher vor dem Kopf (P₁) des Insassen zu entfalten ist, aufweist,
wobei der Kopfschutz-Airbag (34B) über einem Rückspiegel anzuordnen ist und eine Einheit einer rechten Hälfte (34R), welche in dem rechten Bereich von dem Rückspiegel zu entfalten ist, und einer linke Hälfte (34L), welche in dem linken Bereich von dem Rückspiegel zu entfalten ist, ist, und wobei zwischen der rechten Hälfte (34R) und der linken Hälfte (34L) ein Abstand (34M) vorhanden ist, um den Rückspiegel hindurch zu lassen,
**dadurch gekennzeichnet,**
**dass** ein einziger Gaseinlass (34G) an der Seitenmitte des Kopfschutz-Airbags (34; 34A; 34B) vorhanden ist, um den Kopfschutz-Airbag (34; 34A; 34B) durch die Einführung von Gas von dem Gasgenerator (26; 36) durch den einzigen Gaseinlass (34G) aufzublasen; und
**dass** Sitzhöhenerfassungsmittel (50a-c) vorhanden sind, um die Sitzhöhe des Insassen (P) zu erfassen, wobei, wenn diese Sitzhöhe, welche durch diese Sitzhöhenerfassungsmittel (50a-c) erfasst wird, höher als ein vorbestimmter Wert ist, sowohl der Kopfschutz-Airbag (34; 34A; 34B) als auch der Brustschutz-Airbag (24; 44) aufgeblasen werden können, und, wenn die erfasste Sitzhöhe kleiner als ein vorbestimmter Wert ist, nur der Brustschutz-Airbag (24; 44) aufgeblasen werden kann.

2. Insassenschutzvorrichtung nach Anspruch 1, wobei der Kopfschutz-Airbag (34; 34A; 34B) von einem Dach (18) des Fahrzeugs nach unten zu entfalten ist.

3. Insassenschutzvorrichtung nach Anspruch 1 oder Anspruch 2, wobei die Kapazität des Kopfschutz-Airbags (34; 34A; 34B) geringer als die Kapazität des Brust-Airbags (24; 44) ist.

4. lnsassenschutzvorrichtung nach einem der Ansprüche 1 bis 3, wobei der Kopfschutz-Airbag (34; 34A; 34B) entlang der Windschutzscheibe (14) des Fahrzeugs (10) zu entfalten ist, und wobei die Dicke beim Aufblasen 25 bis 200mm beträgt.

## Revendications

1. Dispositif de protection du passager comprenant :
- un coussin gonflable de protection (24, 34 ; 44 ; 34A ; 34B) se gonflant devant le passager d'un véhicule (P) et
- un générateur de gaz (26 ; 36) pour gonfler le coussin gonflable de protection,
dans lequel le coussin gonflable de protection (24, 34 ; 44 ; 34A ; 34B) comprend un coussin gonflable de protection du thorax (24 ; 44) se gonflant devant le thorax (P₂) du passager (P) et un coussin gonflable de protection de la tête (34 ; 34A ; 34B) se gonflant devant la tête (P₁) du passager,
dans lequel le coussin gonflable de protection de la tête (34B) doit être placé au-dessus d'un rétroviseur et est une unité d'une moitié droite (34R) se gonflant dans la zone droite à partir du rétroviseur et une unité d'une moitié gauche (34L) se gonflant dans la zone gauche à partir du rétroviseur et dans lequel un espace (34M) existe entre la moitié droite (34R) et la moitié gauche (34L) pour le passage du rétroviseur,
**caractérisé en ce que**
- une admission de gaz unique (34G) est fournie au niveau du centre latéral de le coussin gonflable de protection de la tête (34 ; 34A ; 34B) pour gonfler le coussin gonflable de protection de la tête (34 ; 34A ; 34B) en introduisant un gaz provenant du générateur de gaz (26 ; 36) via l'admission de gaz unique (34G) et
- **en ce que** des moyens de détection de la hauteur de siège (50a à c) permettant de détecter la hauteur de l'assise du passager (P) sont prévus,
dans lesquels lorsque la hauteur d'assise détectée par le moyen de détection de la hauteur de siège (50a à c) est supérieure à une valeur prédéfinie, à la fois le coussin gonflable de protection de la tête (34 ; 34A; 34B) et le coussin gonflable de protection du thorax (24 ; 44) peuvent se gonfler et, lorsque la hauteur d'assise détectée est inférieure à une valeur prédéfinie, seul le coussin gonflable de protection du thorax (24 ; 44) peut se gonfler.

2. Dispositif de protection du passager selon la revendication 1 dans lequel le coussin gonflable de protection de la tête (34 ; 34A ; 34B) se gonfle vers le bas à partir du plafond (18) du véhicule.

3. Dispositif de protection du passager selon la revendication 1 ou 2 dans lequel la capacité de le coussin gonflable de protection de la tête (34 ; 34A ; 34B) est inférieure à la capacité de le coussin gonflable de protection du thorax (24 ; 44).

4. Dispositif de protection du passager selon l'une quelconque des revendications 1 à 3 dans lequel le coussin gonflable de protection de la tête (34 ; 34A ; 34B) doit se gonfler le long du pare-brise (14) du véhicule (10) et dans lequel l'épaisseur gonflé est comprise entre 25 et 200 mm.
